# EUROPEAN PATENT APPLICATION

(11) **EP 4 195 369 A1**
(43) Date of publication of application: **14.06.2023**
(21) Application number: 21801399.3
(22) Date of filing: 01.11.2021
(51) Int. Cl.: H01M 10/6567, H01M 10/6552, H01M 10/6556, H01M 10/613

(54) **BATTERY COOLING APPARATUS**

(30) Priority: 29.10.2021 KR 20210146653
(71) Applicant: MH TECHNOLOGIES INC., Incheon 21990 (KR)
(72) Inventor: The designation of the inventor has not yet been filed
(74) Representative: Staeger & Sperling Partnerschaftsgesellschaft mbB
(86) International application number: PCT/KR2021/015578
(87) International publication number: WO 2023/074975

(57) **Abstract**

The present invention relates to a battery cooling apparatus and provides a battery cooling apparatus including a housing formed to accommodate a cooling oil in which a plurality of battery cells are contained and an oil cooling part which is provided in the housing and exchanges heat with the cooling oil, wherein the oil cooling part includes a first cooling part which maintains a temperature in a preset temperature range to exchange heat with the cooling oil and a second cooling part which exchanges heat with the first cooling part using a refrigerant supplied from an outside.

## Description

### Technical Field

This invention relates to a battery cooling apparatus, and more specifically, to a battery cooling apparatus in which a nonconductive property of a cooling oil is maintained while a battery is cooled.

### Background Art

Recently, secondary batteries are universally applied to not only portable devices but also electric vehicles (EVs) or hybrid vehicles (HVs) which are driven by electric power sources.

A battery pack applied to an EV or the like is formed to have a structure in which a plurality of battery cells are included in a battery housing, and the battery cell is formed to have a structure which includes a positive electrode current collector, a separator, an active material, an electrolyte, an aluminum thin film layer, and the like and is chargeable and dischargeable due to an electrochemical reaction between components.

When the battery pack generates power, heat is generated due to the electrochemical reaction and when the heat remains in the battery cell of the battery pack without being radiated, since a temperature of the battery cell increases, an operating condition of the battery cell is deteriorated, power generation efficiency may decrease, and a chain reaction may occur to cause thermal runaway, and thus fire, an explosion, and the like may occur.

Conventionally, in order to suppress an increase in temperature of a battery cell when a battery pack is used, an air-cooling method, in which a battery pack includes an air fan and the air fan sprays air, or a fluid-cooling method, in which a battery pack is filled with a refrigerant, is used, but, when a battery cell is overheated for a long time, there is a disadvantage of decreasing a cooling effect.

In addition, a fire occurring in a battery pack is mainly caused by damage to battery cells due to an increase in internal temperature, and when the battery cell is damaged, the gas and electrolyte are ejected and react with oxygen, leading to an explosion.

Accordingly, there is a need for a method of effectively cooling a battery cell and preventing the spread of fire and explosion.

### Related Art

### Patent Document

**(Patent Document 1)** Korean Patent Publication No. 2010-0054684

### Summary of Invention

### Technical Problem

The present invention is directed to providing a battery cooling apparatus capable of constantly controlling an internal temperature of a battery to improve battery efficiency and preventing a fire and explosion due to overheating, overcharging, short-circuiting, and shock of the battery.

In addition, the present invention is directed to providing a battery cooling apparatus which prevents moisture from being generated from oil while cooling the oil heat-exchanged with a battery.

### Solution to Problem

One aspect of the present invention provides a battery cooling apparatus including a housing formed to accommodate a cooling oil in which a plurality of battery cells are contained and an oil cooling part which is provided in the housing and exchanges heat with the cooling oil, wherein the oil cooling part includes a first cooling part which maintains a temperature in a preset temperature range to exchange heat with the cooling oil and a second cooling part which exchanges heat with the first cooling part using a refrigerant supplied from an outside.

The first cooling part may include a heat pipe in which a hollow is formed, and the second cooling part may be provided in the hollow and may include a cooling pipe in which a cooling path is formed, wherein the refrigerant may flow through the cooling path.

The second cooling part may an inlet part through which the refrigerant is introduced from the outside, a cooling body part that accommodates the refrigerant introduced through the inlet part, and an outlet part which discharges the refrigerant of the cooling body part to the outside.

The inlet part and the outlet part may be disposed at an upper end of the oil cooling part in order to avoid the inlet and outlet parts from coming into contact with the oil accommodated in the housing.

The second cooling part may include an inlet part through which a refrigerant is introduced from the outside, a cooling pipe through which the refrigerant introduced through the inlet part flows,
a pipe housing which accommodates the cooling pipe and serves to transfer heat from the first cooling part to the cooling pipe, and an outlet part which discharges the refrigerant of the cooling pipe to the outside.

The cooling pipe may include a first pipe communicating with the inlet part, a second pipe connected to the first pipe, bent several times, and provided in an upper region of the pipe housing, and a third pipe through which the second pipe communicates with the outlet part.

An upper end portion and a lower end portion of the oil cooling part may be open.

The battery cooling apparatus may further include an oil flow part which sprays a gas toward the lower end portion of the oil cooling part so as to flow the cooling oil and increase a heat exchange rate of the cooling oil.

The oil flow part may include a gas spraying part which is disposed at a lower side of the oil cooling part and sprays the gas and a gas recovery part which recovers the gas collected at an upper side of the oil cooling part and transfers the gas to the gas spraying part.

The gas spraying part may include a first spraying part which sprays the gas toward a space between the housing and the oil cooling part and a second spraying part which sprays the gas toward a space between the plurality of battery cells.

### Advantageous Effects of Invention

As described above, the present invention has the following effects.

First, according to one embodiment of the present invention, there are effects in that an internal temperature of a battery can be constantly controlled to improve battery efficiency, and a fire and explosion due to overheating, overcharging, short-circuiting, or shock of the battery can be prevented.

Second, according to one embodiment of the present invention, there is an effect in that moisture generation is prevented in an oil while the oil, which exchanges heat with the battery, is cooled.

### Brief Description of Drawings

FIG. 1 is a perspective view illustrating a battery cooling apparatus according to one embodiment of the present invention.
FIG. 2 is an exploded perspective view illustrating the battery cooling apparatus illustrated in FIG. 1.
FIG. 3 is an exploded perspective view illustrating the oil cooling part according to one embodiment illustrated in FIG. 2.
FIG. 4 is a view for describing an oil flow part.
FIG. 5 is an exploded perspective view illustrating another example of the oil cooling part.

### Detailed Description of Embodiment

It should be understood that embodiments, which will be described below, are shown by way of example to facilitate understanding of the present invention, and the present invention may be variously changed and implemented in forms different from the embodiments described below. However, when it is determined that detailed descriptions of related well-known functions or configurations unnecessarily obscure the gist of the present invention, the detailed descriptions thereof will be omitted. In addition, in order to facilitate understanding of the present invention, the accompanying drawings are not drawn to scale, and dimensions of some components may be exaggerated.

Although the terms "first," "second," used in the present invention may be used herein to describe various elements, these elements should not be limited by these terms. These terms are only used for distinguishing one element from other elements. In addition, the terms used in the present specification are only used for the purpose of describing specific embodiments and are not intended to limit the scope of rights of the present invention. The singular forms include the plural forms, unless the context clearly indicates otherwise. It should be understood that the terms "comprises," "comprising," "includes, " and/or "including" used in the specification specify the presence of stated features, integers, steps, operations, elements, parts, or groups thereof, and do not preclude the presence or addition of one or more other features, integers, steps, operations, elements, parts, and/or groups thereof.

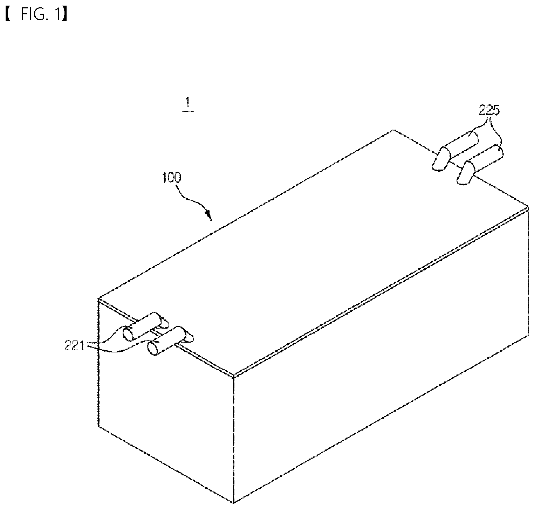

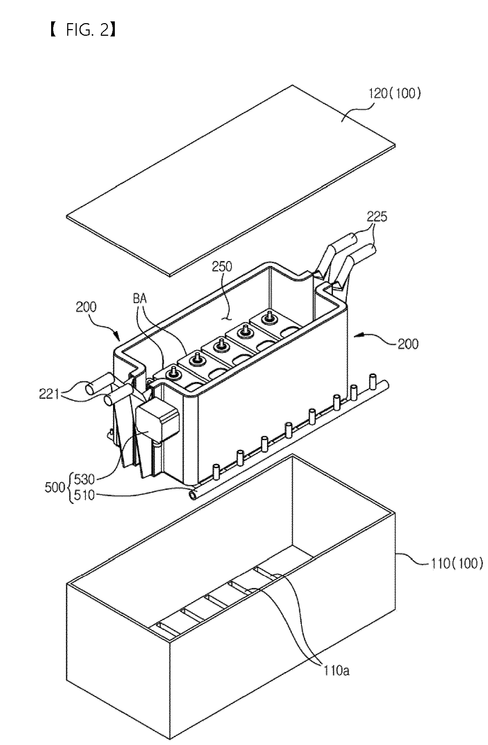

FIG. 1 is a perspective view illustrating a battery cooling apparatus 1 according to one embodiment of the present invention, and FIG. 2 is an exploded perspective view illustrating the battery cooling apparatus 1 illustrated in FIG. 1.

Referring to FIGS. 1 and 2, the battery cooling apparatus 1 according to one embodiment of the present invention includes a housing 100, which is formed to accommodate battery cells BA and a cooling oil, and an oil cooling part 200 which is provided in the housing 100 and exchanges heat with the cooling oil.

The housing 100 includes a first housing 110 in which a space is formed therein and of which an upper end portion is open and a second housing 120 coupled to the upper end portion of the first housing 110 to be opened or closed.

The first housing 110 is formed to accommodate the plurality of battery cells BA and the cooling oil in which the plurality of battery cells BA are contained. A seating slit 110a, on which an oil flow part 500 is seated, is formed in a bottom of the first housing 110.

The oil cooling part 200 includes a first cooling part 210 of which a temperature is maintained within a predetermined temperature range to exchange heat with the cooling oil and a second cooling part 220 which exchanges heat with the first cooling part 210 using a refrigerant supplied from an outside. The battery cooling apparatus 1 according to one embodiment of the present invention further includes the oil flow part 500 which sprays a gas toward a lower end portion of the oil cooling part 200 so as to flow the cooling oil and increase a heat exchange rate of the cooling oil. The oil flow part 500 serves to move a high temperature cooling oil which does not flow smoothly in a space between the plurality of battery cells BA by spraying the gas. The oil flow part 500 will be described in detail below.

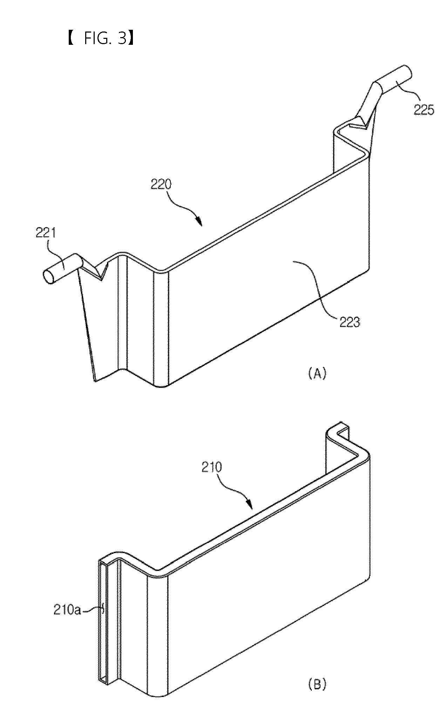

Hereinafter, the oil cooling part 200 according to one embodiment will be described in detail with reference to FIG. 3. FIG. 3 is an exploded perspective view illustrating the oil cooling part 200 according to one embodiment illustrated in FIG. 2. Referring to FIG. 3, the oil cooling part 200 according to one embodiment includes the first cooling part 210 including a phase change material (PCM) to exchange heat with the cooling oil and the second cooling part 220 which receives a refrigerant from the outside to exchange heat with the first cooling part 210. Specifically, the first cooling part 210 includes a heat pipe having a hollow but is not limited thereto. As illustrated in FIG. 3, the first cooling part 210 may include a heat pipe having a plate shape in which a hollow, into which a predetermined component is inserted, is formed.

The heat pipe operates within a predetermined temperature range, and a working fluid is selected according to the temperature range in which the heat pipe should operate. As one example, liquid helium, mercury (523 to 923 K), or sodium (873 to 1473 K) for very low temperatures (2 to 4 K), indium (2000 to 3000 K), ammonia (213 to 373 K), alcohols (methanol (283 to 403 K) or ethanol (273 to 403 K)) for very high temperatures, or water (298 to 573 K) may be used as working fluids. Since the heat pipe uses an known technology, a detailed description thereof will be omitted.

The first cooling part 210 serves as a heat pipe, and the working fluid is selected so that a specific temperature range is maintained to cool the cooling oil heated by heat of the battery cell BA. Different specific temperature ranges are provided for each cooling oil.

Meanwhile, it is known that water in a liquid state is generated in cooling oil when the cooling oil is cooled to a low temperature that is out of a specific temperature range determined by an intrinsic property for each cooling oil. When water in a liquid state is included in the cooling oil, the cooling oil has electrical conductivity, and accordingly, the battery cell BA in direct contact with the cooling oil is damaged. When the first cooling part 210 cools the heated cooling oil in a state in which the first cooling part 210 maintains a temperature in a specific temperature range, the cooling oil is prevented from being cooled to a low temperature that is out of a specific temperature range, and the battery cell BA is also prevented from being damaged.

The second cooling part 220 is provided in a hollow 210a of the first cooling part 210 and is not in direct contact with the cooling oil. An outer circumferential surface of the second cooling part 220 may be in contact with an inner surface of the hollow 210a of the first cooling part 210. The second cooling part 220 includes a cooling pipe in which a hollow cooling path is formed, wherein a refrigerant supplied from the outside flows through the hollow cooling path. A temperature of the refrigerant is set so that the second cooling part 220 sufficiently cools the first cooling part 210.

Specifically, the second cooling part 220 includes an inlet part 221 through which the refrigerant is introduced from the outside, a cooling body part 223 which accommodates the refrigerant introduced through the inlet part 221, and an outlet part 225 which discharges the refrigerant of the cooling body part 223 to the outside.

Since the second cooling part 220 has a structure in which both the inlet part 221 and the outlet part 225 are coupled to the cooling body part 223, the refrigerant may leak and flow to the cooling oil. In this case, when the refrigerant has electrical conductivity, the battery cell BA may be damaged due to the leaked refrigerant.

Accordingly, the inlet part 221 and the outlet part 225 of the second cooling part 220 are formed at the top of the oil cooling part 200 in order to avoid the inlet and outlet parts 221 and 225 from coming into contact with the cooling oil.

In addition, both the inlet part 221 and the outlet part 225 of the second cooling part 220 may be positioned outside at the top of the oil cooling part 200.

In addition, both the inlet part 221 and the outlet part 225 of the second cooling part 220 may pass through the second housing 120 and may be disposed outside the housing 100.

Meanwhile, a space 250 is formed in the oil cooling part 200 to accommodate the battery cell BA, and an upper end portion and the lower end portion of the oil cooling part 200 are open. The battery cell BA may be installed in and withdrawn from the oil cooling part 200 through the open upper end portion of the oil cooling part 200. In addition, by spraying a gas through the open lower end portion of the oil cooling part 200, the cooling oil around the battery cell BA may be induced to flow.

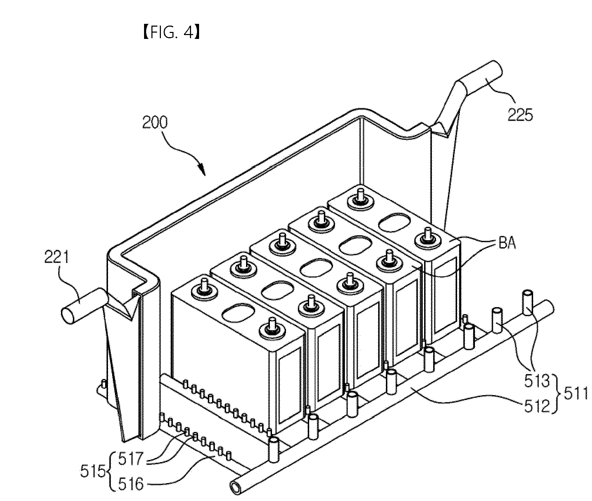

As an example, the oil cooling part 200 may be formed in the shape of a pair of flat cooling plates facing each other with the battery cells BA interposed therebetween. As another example, the oil cooling part 200 may be formed in the shape of a pair of cooling plates whose cross sections have "C" shapes to surround the periphery of side surfaces of the battery cells BA. Hereinafter, the oil flow part 500 will be described with reference to FIG. 4. FIG. 4 is a view for describing the oil flow part 500.

Referring to FIG. 4, the oil flow part 500 includes a gas spraying part 510 which is disposed at a lower side of the oil cooling part 200 and sprays a gas and a gas recovery part 530 which recovers the gas collected at an upper side of the oil cooling part 200 and transfers the gas to the gas spraying part 510.

The gas spraying part 510 includes a first spraying part 511 which sprays the gas toward a space between the housing 100 and the oil cooling part 200 and a second spraying part 515 which sprays the gas toward one or more of the space between the plurality of battery cells BA and a space between the plurality of battery cells BA and the oil cooling part 200.

The first spraying part 511 includes a first spraying pipe 512 extending longitudinally along a space between the housing 100 and the oil cooling part 200 and first spraying hole parts 513 which are formed in the first spraying pipe 512 at predetermined intervals in a longitudinal direction of the first spraying pipe 512 and spray the gas flowing in the first spraying pipe 512 to the outside. One end of the first spraying pipe 512 communicates with the gas recovery part 530 through a flow path (not shown) through which the gas flows to receive the gas recovered from the gas recovery part 530.

The gas sprayed from the first spraying hole part 513 flows upward along the space between the housing 100 and the oil cooling part 200 to move the high temperature cooling oil remaining in the space between the housing 100 and the oil cooling part 200 so as to improve cooling efficiency.

The second spraying part 515 includes a second spraying pipe 516 extending along a space between adjacent battery cells BA and second spraying hole parts 517 which are formed in the second spraying pipe 516 at predetermined intervals in a longitudinal direction of the second spraying pipe 516 and spray the gas flowing in the second spraying pipe 516 to the outside. One end of the second spraying pipe 516 communicates with the first spraying pipe 512. The second spraying pipe 516 is seated in the seating slit 110a of the first housing 110.

The gas sprayed from the second spraying hole parts 517 flows upward along the space between the adjacent battery cells BA to move the high temperature cooling oil remaining in the space between the adjacent battery cells BA or the space between the battery cells BA and the oil cooling part 200 to improve cooling efficiency.

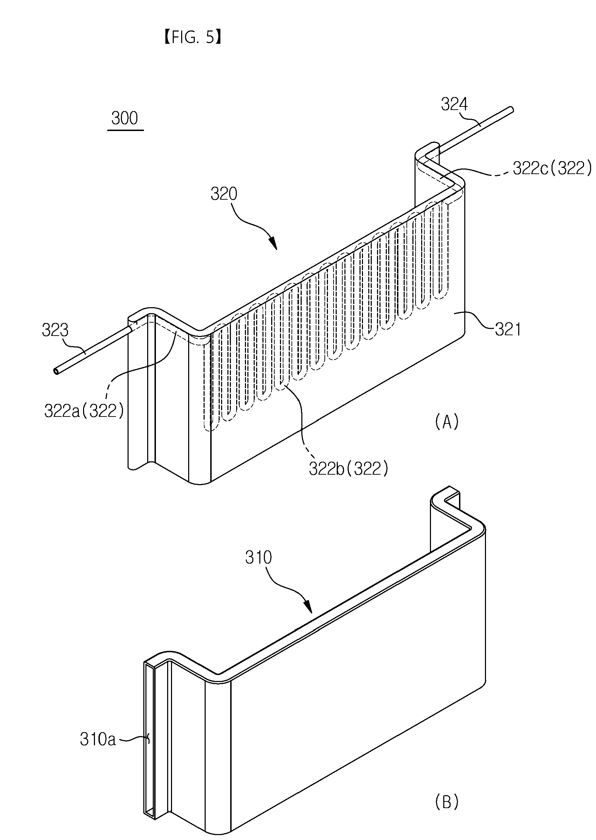

Hereinafter, an oil cooling part 300 according to another embodiment will be described with reference to FIG. 5. FIG. 5 is an exploded perspective view illustrating the oil cooling part 300 according to another embodiment. In the oil cooling part 300 according to another embodiment, which will be described below, the same numerals are assigned to components which are the same as those of the oil cooling part 300 according to one embodiment described above, and the detailed descriptions thereof will be omitted.

Referring to FIG. 5, a second cooling part 320 of the oil cooling part 300 according to another embodiment of the present invention includes an inlet part 323 through which a refrigerant is introduced from an outside, a cooling pipe 322 through which the refrigerant introduced through the inlet part 323 flows, a pipe housing 321 which accommodates the cooling pipe and transfers heat to the cooling pipe from a first cooling part 310, and an outlet part 324 which discharges the refrigerant of the cooling pipe 322 to the outside. The second cooling part 320 is provided in a hollow 310a of the first cooling part 310.

The cooling pipe 322 includes a first pipe 322a communicating with the inlet part 323, a second pipe 322b which is connected to the first pipe 322a, bent several times, and provided in an upper region of the pipe housing 321, and a third pipe 322c through which the second pipe 322b communicates with the outlet part 324.

All or part of the first pipe 322a and the third pipe 322c may be provided in the pipe housing 321.

The second pipe 322b is positioned in the pipe housing 321 and bent several times to exchange heat with the upper region of the pipe housing 321. Bent portions of the second pipe 322b constituting a certain region occupy the upper region of the pipe housing 321. Accordingly, an upper portion of the first cooling part 310, to which a principle of a heat pipe is applied, may be effectively cooled.

Hereinafter, an operation of the battery cooling apparatus 1 will be described.

First, the housing 100 is opened, and then the plurality of battery cells BA are disposed on the oil flow part 500. In this case, the battery cell BA is supported by the second spraying pipe 516, corner portions of two battery cells BA are placed on one second spraying pipe 516 to be spaced apart from each other. Accordingly, the plurality of second spraying hole parts 517 provided in the longitudinal direction of the second spraying pipe 516 may be positioned in a lower portion of the space between two battery cells BA.

When the arrangement of the battery cells BA is completed, the housing 100 is filled with the cooling oil, and the battery cells BA are contained in the cooling oil.

Then, the housing 100 is closed, and when heat radiation starts from the battery cell BA, the battery cell BA primarily exchanges heat with the cooling oil.

The cooling oil, which primarily exchanges heat with the battery cell BA, secondarily exchanges heat with the oil cooling part 200. The heat of the cooling oil is transferred to the first cooling part 210 of the oil cooling part 200 and transferred to the second cooling part 220. The heat transferred to the second cooling part 220 is transferred to the refrigerant of the second cooling part 220 and discharged to the outside with the refrigerant. As an example, the refrigerant may be water but is not limited thereto.

As described above, although the present invention has been described with reference to limited specific embodiments and drawings, the present invention is not limited thereto, and various modifications and changes may be made by those skilled in the art in the technical spirit of the present invention, the scope defined in the claims, and equivalents thereof.

### [Reference Numerals]

1: BATTERY COOLING APPARATUS
100: HOUSING
200, 300: OIL COOLING PART
500: OIL FLOW PART

## Claims

1. A battery cooling apparatus comprising:
a housing formed to accommodate a cooling oil in which a plurality of battery cells are contained; and
an oil cooling part which is provided in the housing and exchanges heat with the cooling oil,
wherein the oil cooling part includes a first cooling part which maintains a temperature in a preset temperature range to exchange heat with the cooling oil and a second cooling part which exchanges heat with the first cooling part using a refrigerant supplied from an outside.

2. The battery cooling apparatus of claim 1, wherein:
the first cooling part includes a heat pipe in which a hollow is formed; and
the second cooling part is provided in the hollow and includes a cooling pipe in which a cooling path is formed, wherein the refrigerant flows through the cooling path.

3. The battery cooling apparatus of claim 2, wherein the second cooling part includes:
an inlet part through which the refrigerant is introduced from the outside;
a cooling body part that accommodates the refrigerant introduced through the inlet part; and
an outlet part which discharges the refrigerant of the cooling body part to the outside.

4. The battery cooling apparatus of claim 3, wherein the inlet part and the outlet part are disposed at an upper end of the oil cooling part in order to avoid the inlet and outlet parts from coming into contact with the oil accommodated in the housing.

5. The battery cooling apparatus of claim 2, wherein the second cooling part includes:
an inlet part through which a refrigerant is introduced from the outside;
a cooling pipe through which the refrigerant introduced through the inlet part flows;
a pipe housing which accommodates the cooling pipe and serves to transfer heat from the first cooling part to the cooling pipe; and
an outlet part which discharges the refrigerant of the cooling pipe to the outside.

6. The battery cooling apparatus of claim 5, wherein the cooling pipe includes:
a first pipe communicating with the inlet part;
a second pipe connected to the first pipe, bent several times, and provided in an upper region of the pipe housing; and
a third pipe through which the second pipe communicates with the outlet part.

7. The battery cooling apparatus of claim 2, wherein an upper end portion and a lower end portion of the oil cooling part are open.

8. The battery cooling apparatus of claim 7, further comprising an oil flow part which sprays a gas toward the lower end portion of the oil cooling part so as to flow the cooling oil and increase a heat exchange rate of the cooling oil.

9. The battery cooling apparatus of claim 8, wherein the oil flow part includes:
a gas spraying part which is disposed at a lower side of the oil cooling part and sprays the gas; and
a gas recovery part which recovers the gas collected at an upper side of the oil cooling part and transfers the gas to the gas spraying part.

10. The battery cooling apparatus of claim 9, wherein the gas spraying part includes:
a first spraying part which sprays the gas toward a space between the housing and the oil cooling part; and
a second spraying part which sprays the gas toward a space between the plurality of battery cells.
